# EUROPEAN PATENT APPLICATION

(11) **EP 1 865 659 A1**
(43) Date of publication of application: **12.12.2007**
(21) Application number: 06722171.3
(22) Date of filing: 28.03.2006
(51) Int. Cl.: H04L 12/14

(54) **A METHOD FOR IMPLEMENTING A PREPAID SHARING ACCOUNT**

(30) Priority: 28.03.2005 CN 200510059317
(71) Applicant: Huawei Technologies Co., Ltd., Longgang District, Shenzhen Guangdong 518129 (CN)
(72) Inventor: LI, Bo, Shenzhen, Guangdong 518129 (CN); LIU, Feng, Shenzhen, Guangdong 518129 (CN); CUI, Wei, Shenzhen, Guangdong 518129 (CN)
(74) Representative: Goddar, Heinz J.
(86) International application number: PCT/CN2006/000519
(87) International publication number: WO 2006/102836

(57) **Abstract**

A method for implementing a prepaid sharing account comprises: the user sends the request of using the account resource to the service control function managing module via the service control function module; the service control function managing module judges whether accepting the request or not; if it accepts, it allocates the account resource for the user according to the allocation scheme of the account resource, and returns the allocation result to the service control function module, so that the user uses the account resource according to the allocation result of the account resource returned from the service control function module; if it does not accept, it returns the failure result of resource allocation for the user, and ends the process. Using the said technical solution of the present invention, it can implement a sharing account of the prepaid user in the case that it need not the coordination of the service supporting system, and can apply to the small parties such as a family or chummy users etc. It can provide agiler and more convenient service to the prepaid user and satisfy the need of the user.

## Description

### Field of the Invention

The present invention relates to the field of communication technologies and in particular to a method for implementing a prepaid common account.

### Background of the Invention

As billing demands of users get diversified, common account service becomes an ideal billing option for increasing users. Common account service is a service which allows a plurality of users to share one account for billing, including postpaid user common account and prepaid user common account.

The function of the postpaid user common account is accomplished through cooperative operations of a service support system and an intelligent network system. Currently, the postpaid user common account is implemented as follows.

Virtual Private Network (VPN) service creates a group account and individual accounts for users, wherein the group account is a common account for respective members within a group. The VPN implements the function of a common account through the group account.

Virtual Private Mobile Network (VPMN) service is a service which allows enterprise users or corporation users to communicate with each other through abbreviated dialing or dedicated numbering plans over a private network of logic voice circuit, based on Public Land Mobile Network (PLMN) and Public Switched Telephone Network (PSTN). VPMN service operated in PLMN provides mobile users in a user group that has subscribed to the service with private network service similar to PBX service in the PSTN.

In VPMN service, an individual account is a user account created separately for each of VPMN users within a VPMN group. The individual account records cost which is generated due to calls of the VPMN user (including calls inside and outside the network) for which the VPMN group is willing to pay. The cost is also recorded in the group account of the group to which the user belongs. The cost generated due to other calls made by the user is not recorded in the individual account and the group account of VPMN, but is recorded in an individual ordinary account. The individual account is set with a limit indicative of a maximum call cost allowable for the corresponding user per month, and after the maximum call cost is exceeded, the user can still share the VPMN service, but the call cost is recorded in the individual ordinary account of the user. Upon clearance of payment of the user cost, the balance of the account is set to zero. Generally, the user can inquire his own account, and an administrator can modify cost limit of any user.

In VPMN service, each group that has subscribed to the VPMN service is provided with a group account, which indicates the total call cost of the group and based upon which an operator charges for the calls. The group account is a sum of all VPMN individual accounts within the group.

Cooperative operations of a service support system and an intelligent network system are required for VPN to implement the function of common accounts because the accounts related to the VPN are provided in the service support system.

Since the VPN service is a postpaid service (typically one clearance per month), and the prepaid service is a pay first and use later service, a prepaid user cannot use the VPN service. Consequently, the implementing solution of a VPN service-based common account cannot be applied to a prepaid user. Moreover, a VPN user is typically a relatively large enterprise or group, and demands of small groups, such as a family or a group of intimate users, for a prepaid user common account cannot be satisfied.

### Summary of the Invention

The present invention provides a method for implementing a prepaid common account without cooperation of a service support system.

According to an embodiment of the present invention, a method for implementing a prepaid common account is provided.

The method includes:
A. initiating, by a user, an account resource use request to a service control function management module through a service control function module;
B. determining, by the service control function management module, whether to accept the request, and if yes, allocating an account resource to the user according to an account resource allocation schema, returning an account resource allocation result to the service control function module, and proceeding with step C; otherwise, returning a resource allocation failure result to the user, and ending the process;
C. utilizing, by the user, the account resource according to the account resource allocation result returned from the service control function module.

In allocating an account resource, the service control function management module firstly determines whether the account resource is above a preset threshold, and if yes, extracts preset allocation parameter values of the account resource, and allocates the account resource to the user according to the values; otherwise, allocates all remaining account resource to the user.

In allocating an account resource, the service control function management module extracts preset limit condition parameters of resource allocation and account resource allocation values corresponding to the respective limit condition parameters, then determines a limit condition parameter met by the total amount of the account resource, and allocates the account resource to the user according to the account resource allocation value corresponding to the limit condition parameter. If the account resource use request carries a parameter of user resource request amount, and the service control function management module determines that the account resource meets the user resource request amount, the account resource is allocated to the user preferentially by the request amount.

Step A further includes: initiating, by the user, an account resource use request to the service control function module, and determining, by a service control point to which the service control function management module belongs, whether the resource directed to by the request is a local resource, and if yes, transmitting the request to a local service control function management module for requesting the account resource; otherwise, transmitting the request to a service control point where the account resource exists, and forwarding, by the service control point, the request to a service control function management module at the service control point.

It may be appreciated from the inventive solutions that the allocating of the common account resource in the invention is done all by entities of an intelligent network. In this way, a prepaid user common account can be implemented without cooperation of a service support system, and can be applied to small groups, such as a family or a group of intimate users. A flexible and convenient service can be provided for prepaid users to satisfy their demands.

### Brief Descriptions of the Drawings

Fig.1 is a networking diagram of a system according to the present invention;
Fig.2 is a schematic flow diagram of a method according to the present invention;
Fig.3 is a schematic flow diagram of a method for requesting an account resource within an SCP according to the present invention;
Fig.4 is a schematic flow diagram of a method for requesting an account resource across several SCPs according to the present invention.

### Detailed Descriptions of the Embodiments

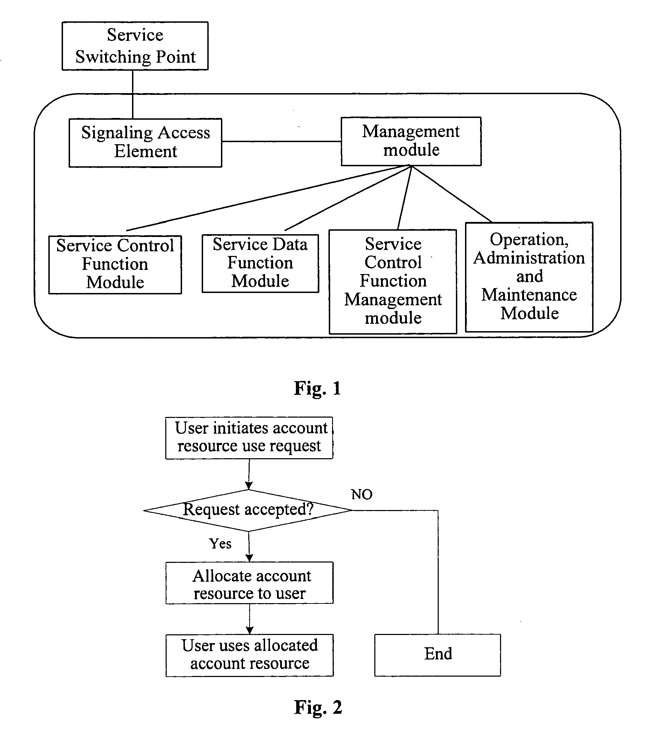

The invention is implemented based upon a Wireless Intelligent Network-Service Control Point (WIN-SCP). An wireless intelligent network system is as illustrated in Figure 1. A Service Control Function (SCF) module is mainly used for interpreting service logics. A management module is used mainly for implementing communications between an SCP and other network entities. A Service Control Function management module (SCFServer) is a management module in the wireless intelligent network, which is configured to implement management of shared resources in which an account resource is a very important kind of resource. A Service Data Function (SDF) module is used for maintaining data. An Operation, Administration and Maintenance (OAM) module is used for implementing system alarm and maintenance functions. The technical solution of the present invention is implemented through the SCF and the SCFServer, and the other modules will not be described further.

In order to implement a prepaid common account without cooperation of a service support system, a general processing according to the present invention is as illustrated in Figure 2. A user sends an account resource use request to a service control function management module (SCFServer) through a service control function (SCF). The SCFServer determines whether to accept the account resource use request, and if the request is accepted, the SCFServer allocates an account resource to the user according to an account resource allocation schema, and returns an account resource allocation result to the SCF. Then the user utilizes the account resource according to the account resource allocation result returned from the SCF. If the request is not accepted, a resource allocation failure result is returned to the user through the SCF, and the process is completed.

The SCFServer determines whether to accept the request based on whether the account resource is available, whether total amount of the account resource use request reaches a request amount limit for the user, whether total number of the users who have initiated an account resource use request, exceeds a preset number limit, or occupancy status of the system resources, etc.

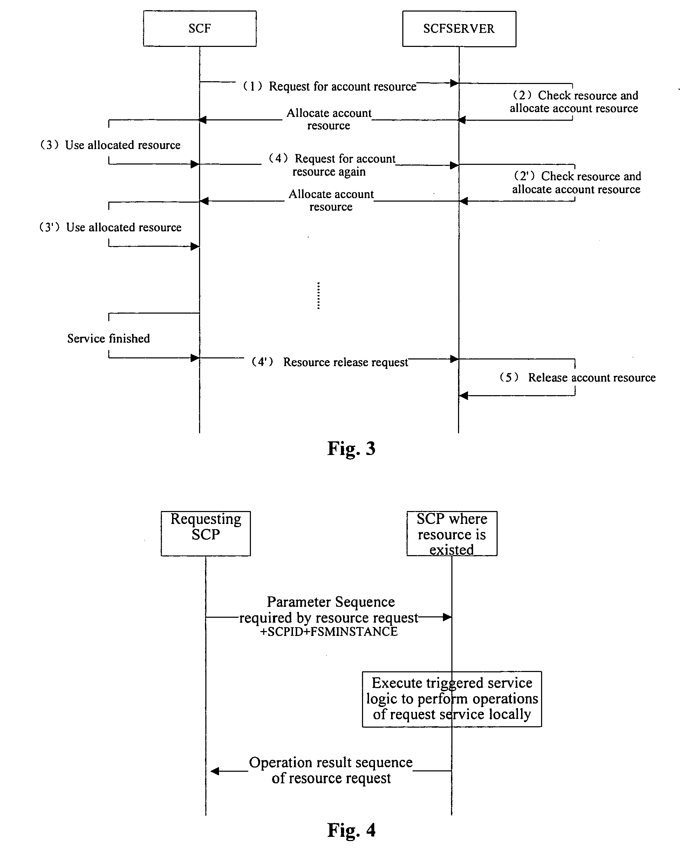

A specific flow of the present invention is as illustrated in Figure 3.
A1. A user service initiates an account resource use request to an SCFServer through an SCF, and the account resource use request carries a parameter that may be used for updating the account resource.
B1. The SCFServer determines whether to accept the account resource use request, and if accepts, allocates an account resource to the user, and returns an account resource allocation result to the SCF.

The SCFServer firstly determines whether an account resource has been initialized, and if not, initializes the account resource according to the parameter of "Update Account Resource" carried in the account resource use request, and allocates the account resource. If the account resource has been initialized and is sufficient, the SCFServer allocates the account resource according to an account resource allocation schema. If the account resource has been initialized but is not sufficient, the SCFServer allocates all remaining account resource to the user. Information related to the account resource used by the user is recorded in an allocation history record.

There are various account resource allocation schema, which may be set in service-related parameters by the user or system independently. For instance, parameters such as a threshold, a maximum amount used by each user, a maximum amount used one time by the user, or a maximum duration of each call by the user may be set for an account resource. If the account resource is above the threshold, the set maximum duration of each call by the user is returned to the user as the account resource allocated to the user, and if the account resource is below the threshold, all remaining account resource is allocated to the user.

The account resource allocation schema may also be an allocation policy which specifies allocation conditions. According to the allocation policy, parameters of resource allocation limit conditions and respective account resource allocation values under the respective resource allocation limit conditions are preset. The process of allocating the account resource to the user according to the account resource allocation schema includes: extracting the parameters of resource allocation limit conditions and total amount of account resources; determining a resource allocation limit condition that is met by the user according to the total amount of the account resource; and allocating an account resource corresponding to the limit condition.

For instance, the resource allocation limit conditions are set as A1, A2, ..., An, and resource request amounts under the respective conditions Ai (i=1, 2, ..., n) are B1, B2, ..., Bn, where A1>=A2>=...>=An. The resource allocation limit conditions and the resource request amounts allocated to the user may be stored in the SCP, the SCFServer, or an independent third-party device.

After obtaining the above resource allocation limit conditions, the SCFServer allocates the account resource according to total amount of the account resource, and allocation rules are as follows :
i) If the total amount of the account resource>=A1, the resource with an amount of B1 is allocated to the user, otherwise, perform the process ii);
ii) If the total amount of the account resource>=A2, the resource with an amount of B2 is allocated to the user, otherwise, perform the process iii);
n) If the total amount of the account resource>=An, the resource with an amount of Bn is allocated to the user, otherwise, perform the process n+1);
n+1) A resource allocation failure is returned.

The SCFServer determines whether the account resource is sufficient according to a preset threshold parameter. If the account resource is sufficient, a preset allocation value of the account resource is returned directly, and the preset allocation value of the account resource may be the maximum amount used one time by each user or the maximum duration of each call of the user. If the account resource is not sufficient, the account resource is allocated to the user according to the above allocation policy which specifies the allocation conditions.

A parameter of user resource request amount may also be carried in the account resource use request. The SCFServer determines whether the account resource is sufficient according to the parameter of the user resource request amount and the account resource. If the account resource is sufficient, the user resource request amount is returned to the user as the amount of the resource allocated to the user. If the account resource is not sufficient, an account resource is allocated to the user according to the above allocation policy which specifies the allocation conditions.

C1. The user service utilizes the account resource according to the allocation result returned from the SCFServer.

The account resource use request transmitted by the user to the SCFServer through the SCF may carry a resource type, a resource request ID, total amount of resource, a resource request amount, as indicated in Table 1.

**Table 1**

| **Field** | **Length (byte)** | **Type** | **Description** |
|---|---|---|---|
| ResourceType | 4 | Integer | Resource type |
| ResourceID | 4 | Integer | Resource request ID, i.e., a unique identifier of the resource requested by the user (SCF) from the SCFServer |
| ResourceTotalNum | 4 | Integer | Parameter of total amount of account resource The SCFServer initializes the resource according to the parameter of the total amount of the account resource if the account resource has not been initialized; if the resource has been initialized, the parameter of the total amount of the account resource will not be active. |
| RequstNum | 4 | Integer | Resource request amount, i.e., the amount of the resource requested by a user (SCF) |
| ResourceUsedNum | 4 | Integer | Amount of resource used, i.e., the amount of the resource used by the user (SCF) after a successful request for the resource. In an operation of requesting the resource, "ResourceUsedNum" may be or may not be 0. If "ResourceUsedNum" is not 0, the SCFServer shall reclaim the resource. Amount of resource to be reclaimed is difference between the amount of the allocated resource and the amount of resource used. |

Table 2 indicates parameter of the account resource allocation result returned from the SCFServer to the SCF.

**Table 2**

| **Field** | **Length (byte)** | **Type** | **Description** |
|---|---|---|---|
| TotalResourceNum | 4 | Integer | Updated total amount of resource, returned by the SCFServer to the user |
| allocateRecNum | 4 | Integer | Amount of account resource allocated by the SCFServer, indicating the amount of the resource allocated actually to the user (SCF), which is returned from the SCFServer. If the parameter takes a value of 0, it indicates a resource allocation failure. |

The user service or the user may also determine whether to proceed with requesting for the account resource according to use of obtained user resource or a specific service flow. If the account resource has been used up, and the service flow requires to proceed with requesting for the account resource, the process returns to processing of A1.

The user service or the user may also determine whether to release the account resource according to the use of the obtained user resource or a specific service flow. If the account resource has not been used up, and the service flow will not utilize obtained account resource any longer, the user service or the user requests the SCFServer to release the account resource, so as to return remaining account resource to the SCFServer for use of the account resource by other users. Upon receiving the request to release the account resource, the SCFServer release the account resource, and clears an allocation history record of the account resource used by the user.

The SCFServer may also maintain a timer. If it is determined that there is no request for an account resource within a preset period of time, the SCFServer clears the account resource, and thus the account resource will be in an un-initialized status. Upon receiving another request for the account resource, the SCF Server initializes the account resource, and then allocates account resource.

Table 3 indicates parameters that are carried in the request for releasing the account resource initiated by the SCF to the SCFServer.

**Table 3**

| **Field** | **Length (byte)** | **Type** | **Description** |
|---|---|---|---|
| ResourceType | 4 | Integer | Resource type |
| ResourceID | 4 | Integer | Requested resource ID Unique identifier of the resource |
| UsedResource | 4 | Integer | Amount of used account resource, i.e., the amount of the account resource as used upon a successful resource request by the user. The amount of the resource to be released equals to the amount of the allocated resource minus the amount of the used resource. |

The user may also determine whether to request the SCFServer to supplement the account resource according to use of obtained user resource or a specific service flow. If the SCFServer accepts the request for supplementing the account resource, the SCFServer supplements the account resource according to parameters of the account resource to be supplemented. The parameters of the account resource are carried in the user request or set by the system. This operation may be implemented only if a certain account resource has been initialized. If the resource is not in an initialized status, the SCFServer will return a failure to the user and reason for failure is that the resource is not initialized.

Table 4 indicates parameters of the resource supplementing.

**Table 4**

| **Field** | **Length (byte)** | **Type** | **Description** |
|---|---|---|---|
| ResourceType | 4 | Integer | Resource type |
| ResourceID | 4 | Integer | Requested resource ID, i.e., a unique identifier of the resource requested by the user (SCF) to be supplemented from the SCFServer. |
| AddResource Num | 4 | Integer | Amount of resource to be supplemented: upon receipt of a request for resource supplementation, the SCFServer reclaims the resource into a current resource pool; the amount of the reclaimed resource is specified by the amount of resource to be supplemented. |

The SCFServer returns a parameter of total amount of the resource to the SCF, that is, the total amount of the resource after the supplement. If processing of supplementing the account resource fails, a resource supplement failure is returned to the user.

In a practical application, the account resource may be set in different SCPs. In such a situation, multi-SCP support is needed. After a first SCP accepts a account resource use request from an SCF to which the first SCP belongs, the first SCP determines whether it is required to request for account resource from a second SCP where the account resource exists according to user ID carried in the account resource use request. If the first SCP determines that the account resource requested by the user service locally exists, the first SCP requests to a local SCFServer for the resource; otherwise the first SCP will request for the account resource from the second SCP where the resource exists. The first SCP uses an Execute operation to send a resource request to the second SCP where the resource exists. All operations of plurality of SCPs at different sites are accomplished via triggering service logics, as illustrated in Figure 4. In order to identify uniquely users possibly from different SCPs, the user ID (DescriberID:char[20]) is introduced. The user ID is a set of codes to distinguish different SCP users, and the user ID comprises the following fields: Coding method + SCPID + FSMInstance, where the first byte indicates a coding method of the user ID, SCPID identifies different SCPs, and the FSMInstance identifies uniquely a user at an SCP, who requests for an account resource. Moreover, SCPID and FSMInstance are presented in a form of a character string.

It is evident that those skilled in the art can make various modifications and variations to the invention without departing from the spirit and scope of the invention. Accordingly, the invention is intended to encompass these modifications and variations made thereto provided that they fall within the scope of the appended claims and equivalents thereof of the invention.

## Claims

1. A method for implementing a prepaid common account, comprising:
A. initiating, by a user, an account resource use request to a service control function management module through a service control function module;
B. determining, by the service control function management module, whether to accept the request and if yes, allocating an account resource to the user according to an account resource allocation schema, and returning an account resource allocation result to the service control function module and proceeding with the following step C; otherwise, returning a resource allocation failure result to the user, and ending the process;
C. utilizing, by the user, the account resource according to the account resource allocation result returned from the service control function module.

2. The method according to claim 1, wherein in step B, the process of allocating an account resource comprises: determining whether the account resource is above a preset threshold, and if yes, extracting preset allocation parameter values of the account resource, and allocating the account resource to the user according to the values; otherwise, allocating all remaining account resource to the user.

3. The method according to claim 1, wherein in step B, the process of allocating the account resource comprise: extracting, by the service control function management module, preset limit condition parameters of resource allocation and account resource allocation values corresponding to the respective limit condition parameters, determining a limit condition parameter met by total amount of the account resource, and allocating the account resource to the user according to the account resource allocation value corresponding to the limit condition parameter.

4. The method according to claim 3, wherein if the account resource use request carries a parameter of user resource request amount, and if the service control function management module determines in step B that the account resource meets the user resource request amount, the account resource is allocated to the user preferentially by the request amount.

5. The method according to any one of claims 1 to 4, wherein if the account resource use request carries a source update parameter, step B further comprises:
determining whether the account resource is in an initialized status, and if yes, proceeding with step B, otherwise, initializing the account resource according the resource update parameter, and then proceeding with step B.

6. The method according to claim 5, further comprising: re-initiating an account resource use request to the service control function management module, if the service control function module determines to proceed with a request for the account resource according to use of obtained account resource or service flow.

7. The method according to claim 5, further comprising: transmitting, by the service control function module, a request for releasing the user resource to the service control function management module, if the account resource obtained by the user has not been used up, and the service flow does not require use of the account resource any longer; and
releasing, by the service control function management module, the account resource upon receipt of the request for releasing the user resource.

8. The method according to claim 5, further comprising: clearing, by the control function management module, the account resource and setting the account resource to an un-initialized status, if the service control function management module has not received an account resource request within a preset period of time.

9. The method according to claim 5, further comprising: initiating a request for supplementing the account resource by the user through the service control function module, or by the service control function module, to the service control function management module; and upon receipt of the request, supplementing the account resource by the service control function management module.

10. The method according to claim 5, wherein step A further comprises: initiating, by the user, an account resource use request to the service control function module;
determining, by a service control point to which the service control function management module belongs, whether the resource directed to by the request locally exists, and if yes, transmitting the account resource use request to a local service control function management module for requesting the account resource; otherwise, transmitting the request to a service control point where the account resource exists, and forwarding, by the service control point where the account resource exists, the request to a service control function management module at the service control point.

11. The method according to claim 1, wherein in step B, the service control function management module determines whether to accept the request according to whether the account resource is available, whether the account resource use request that has been initiated reaches a request amount limit for the user, whether the number of users who have initiated an account resource use request exceeds a preset number limit, or the occupancy status of system resources.
